# FASCICULE DE BREVET EUROPEEN

(11) **EP 3 309 061 B1**
(45) Date de publication et mention de la délivrance du brevet: **02.01.2019**
(21) Numéro de dépôt: 17192890.6
(22) Date de dépôt: 25.09.2017
(51) Int. Cl.: B64C 11/30, B64C 13/04, B64C 27/26, B64C 27/56, B64D 31/04

(54) **ORGANE DE COMMANDE ELECTRIQUE, AERONEF A VOILURE TOURNANTE ET PROCEDE**
ELEKTRISCHES STEUERORGAN, DREHFLÜGELFLUGZEUG UND VERFAHREN
AN ELECTRIC CONTROL MEMBER, A ROTARY WING AIRCRAFT, AND A METHOD

(30) Priorité: 12.10.2016 FR 1601481
(43) Date de publication de la demande: 18.04.2018
(73) Titulaire: Airbus Helicopters, 13725 Marignane Cedex (FR)
(72) Inventeur: SALESSE-LAVERGNE, Marc, 13190 ALLAUCH (FR); ABDELLI, Kamel, 13011 MARSEILLE (FR); SELLIER, Olivier, 13510 EGUILLES (FR); BIHEL, Jean-Romain, 13740 LE ROVE (FR)
(74) Mandataire: GPI & Associés

(56) Documents cités:
- WO-A2-2015/181525
- WO-A2-2016/043943
- FR-A1- 2 984 004
- US-A1- 2011 140 690

## Description

La présente invention concerne un organe de commande électrique, un aéronef à voilure tournante comprenant un tel organe de commande, et un procédé appliqué par l'aéronef.

Un aéronef à voilure tournante de type hélicoptère comporte au moins un rotor principal qui participe au moins partiellement à la sustentation et à la propulsion de cet aéronef.

En outre, un système permet au moins de contrôler le mouvement en lacet de l'aéronef.

Dès lors, un tel hélicoptère comporte trois axes de pilotage. Un premier axe consiste à utiliser une première commande pour contrôler la norme du vecteur portance de l'aéronef. Un deuxième axe consiste à utiliser une deuxième commande pour commander l'orientation de ce vecteur portance, et un troisième axe consiste à utiliser une troisième commande pour commander le mouvement en lacet de l'aéronef.

Par exemple, un hélicoptère peut comprendre un rotor principal participant à sa propulsion et sa sustentation. De plus, un hélicoptère peut comprendre un rotor auxiliaire participant au moins au contrôle du mouvement en lacet.

Dès lors, un levier de pas collectif permet de contrôler collectivement le pas des pales du rotor principal pour régler la portance de l'aéronef. Un manche cyclique permet de contrôler cycliquement le pas des pales du rotor principal pour régler l'orientation du vecteur portance de l'aéronef. Enfin, un palonnier permet de régler collectivement le pas des pales du rotor auxiliaire pour contrôler le mouvement en lacet de l'hélicoptère.

Selon une autre réalisation, un hélicoptère peut comprendre deux rotors principaux, éventuellement coaxiaux.

Dès lors, un levier de pas collectif peut permettre de contrôler collectivement le pas des pales des rotors principaux pour régler la portance de l'aéronef. Un manche cyclique peut permettre de contrôler cycliquement le pas des pales des rotors principaux pour régler l'orientation du vecteur portance de l'aéronef. Enfin, un palonnier peut permettre de régler le couple exercé par au moins un rotor principal sur le fuselage de l'aéronef, afin de contrôler le mouvement en lacet de l'aéronef au travers de l'application de couples différents.

Un autre type d'aéronef à voilure tournante dit « hybride » par commodité comporte au moins un rotor qui participe au moins partiellement à la sustentation et à la propulsion de cet aéronef. De plus, l'aéronef comporte un dispositif permettant de contrôler le mouvement en lacet de l'aéronef. Cet aéronef comprend aussi un système apte à exercer, au moins selon le sens d'avancement de l'aéronef, une poussée dite « poussée additionnelle » par commodité. Cette poussée additionnelle est qualifiée d'« additionnelle » dans la mesure où cette poussée est axialement indépendante de la poussée exercée par la voilure tournante.

Outre les trois axes de pilotage usuel, un tel aéronef à voilure tournante hydride comprend un quatrième axe de pilotage. Ce quatrième axe de pilotage consiste à utiliser une quatrième commande pour piloter la norme de la poussée additionnelle.

Par exemple, un aéronef à voilure tournante hybride peut comprendre un rotor principal qui participe au moins partiellement à la sustentation et à la propulsion de cet aéronef. De plus, cet aéronef à voilure tournante hybride comporte un système propulsif muni de deux hélices participant au moins partiellement à la propulsion de l'aéronef et au contrôle du mouvement en lacet de cet aéronef.

Un levier de pas collectif peut permettre de contrôler collectivement le pas des pales du rotor principal pour régler la norme du vecteur portance de l'aéronef. Un manche cyclique peut permettre de contrôler cycliquement le pas des pales du rotor principal pour régler l'orientation du vecteur portance de l'aéronef.

En outre, une commande de poussée peut permettre à un pilote de régler collectivement un pas moyen des pales des hélices pour piloter la poussée additionnelle générée conjointement par les hélices.

De plus, un palonnier peut permettre de régler la répartition de cette poussée additionnelle entre les deux hélices pour contrôler le mouvement en lacet de l'aéronef au travers de l'application de poussées différentes à l'aide des hélices. Ce palonnier peut par exemple permettre de régler un pas différentiel, le pas des pales d'une hélice étant par exemple égal à la somme du pas moyen et de la moitié du pas différentiel, le pas des pales de l'autre hélice étant par exemple égal à la différence du pas moyen et de la moitié du pas différentiel.

La commande de poussée peut prendre la forme d'une commande « tout ou rien ». Lorsque la commande de poussée est manoeuvrée, cette commande de poussée génère un ordre d'augmentation ou de réduction du pas moyen des pales des hélices. Cet ordre est transmis à des actionneurs pour modifier le pas des pales des deux hélices de la même manière. Par exemple, un actionneur est agencé sur une chaîne de transmission mécanique contrôlant un distributeur hydraulique, ce distributeur hydraulique alimentant un vérin hydraulique apte à engendrer un mouvement des pales d'une hélice.

Une telle commande de poussée est intéressante. Néanmoins, la modification du pas moyen des hélices peut être trop lente pour pouvoir solliciter rapidement une augmentation de la puissance développée par l'installation motrice entrainant les hélices, ou encore trop rapide pour piloter finement la vitesse d'avancement de l'aéronef par exemple lors de vols à proximité d'autres aéronefs.

Par ailleurs, une commande de vol indépendante de la commande de poussée peut positionner les pales des hélices dans une position prédéterminée, notamment lors d'une phase de vol en autorotation.

Une commande mécanique de secours peut aussi être prévue pour permettre de piloter les hélices en cas de dysfonctionnement de la commande de poussée. Cette commande mécanique peut comprendre un levier mécanique apte à déplacer mécaniquement ladite chaîne de transmission mécanique contrôlant un distributeur hydraulique.

Par ailleurs, les aéronefs connus sous les marques Bell V-22® et Agusta Westland AW609® sont équipés de rotors basculants. Des commandes permettent de commander la poussée longitudinale de l'aéronef en pilotant le basculement des nacelles portant les rotors, assurant ainsi une transition entre un "mode de fonctionnement hélicoptère" et un "mode de fonctionnement avion". Cette situation s'écarte cependant des problèmes rencontrés pour piloter les hélices d'un aéronef hybride à voilure tournante.

Le brevet WO 2016/043943A2 reprend le concept d'une commande tout-ou-rien de la variation du pas de l'hélice ou des hélices propulsives et ajoute une possibilité de commander un retour à poussée nulle de cette ou ces hélices propulsives.

Le document FR 2984004 décrit un dispositif de commande rotatif muni d'une molette, et d'un dispositif de rappel tendant à rappeler la molette dans une position neutre. Un dispositif d'indexation permet de maintenir la molette dans au moins une position par rapport à un support. Le dispositif de commande comporte en outre un circuit imprimé muni d'un capteur pour détecter un mouvement de la molette.

Ce document FR 2984004 est éloigné de l'invention en n'ayant pas trait à la commande d'une poussée additionnelle d'un aéronef à voilure tournante hybride.

Le document WO 2015/181525 et le document US 2011/140690 sont aussi connus.

Le document WO 2015/181525 décrit un dispositif de commande électrique muni d'un moyen de manoeuvre et d'un support. Le dispositif de commande comporte un capteur pour mesurer une position courante du moyen de manoeuvre et un capteur d'effort.

Le document US 2011/140690 décrit un dispositif de commande électrique muni d'un moyen de manoeuvre et d'un support. Le dispositif de commande comporte un capteur pour mesurer une position angulaire courante du moyen de manoeuvre.

La présente invention a alors pour objet de proposer un dispositif de commande innovant pouvant notamment être utilisé pour piloter une poussée d'un aéronef.

L'invention concerne donc un dispositif de commande électrique muni d'un moyen de manoeuvre et d'un support, le moyen de manoeuvre étant mobile par rapport à ce support, le moyen de manoeuvre étant destiné à être déplacé par rapport au support par un individu, le dispositif de commande électrique comprenant un premier système de mesure qui réalise une première mesure d'une position courante du moyen de manoeuvre par rapport à une position neutre.

Le dispositif de commande électrique comprend un deuxième système de mesure qui réalise une deuxième mesure de la position courante, le premier système de mesure et le deuxième système de mesure étant indépendants et dissimilaires, le dispositif de commande comprenant une unité de traitement comparant la première mesure et la deuxième mesure pour générer un signal de commande en fonction de ladite position courante, l'unité de traitement considérant que le moyen de manoeuvre est dans la position neutre lorsque la première mesure et la deuxième mesure ne correspondent pas à une même position du moyen de manoeuvre.

Dans ce cas de figure, une alerte sonore et/ou visuelle de détection de panne peut être émise par l'unité de traitement.

L'expression « moyen de manoeuvre » désigne un organe pouvant être manoeuvré par un individu. En particulier, cette expression désigne un organe mobile d'un commutateur électrique. Par exemple, le moyen de manoeuvre peut comprendre une molette mobile en rotation par rapport au support, un levier...

Les expressions « première mesure » et « deuxième mesure » représentent des données qui varient en fonction de la position du moyen de manoeuvre par rapport à une référence. Par exemple, la position angulaire d'une molette par rapport à une référence est mesurée au travers de la première mesure et de la deuxième mesure. Dès lors, pour deux positions différentes du moyen de manoeuvre, la première mesure et la deuxième mesure doivent prendre chacune deux valeurs différentes.

L'expression « indépendantes et dissimilaires » signifie que le premier système de mesure et le deuxième système de mesure génèrent des signaux de natures différentes, bien que tous deux soient relatifs à la position du moyen de manoeuvre. La première mesure et la deuxième mesure représentent des données différentes, bien que représentatives toutes deux de la position du moyen de manoeuvre. Par exemple, la première mesure retranscrit la position du moyen de manoeuvre sous la forme d'un courant électrique présentant une certaine tension électrique, alors que la deuxième mesure retranscrit la position du moyen de manoeuvre sous la forme d'une valeur binaire.

Ainsi, l'invention ne met pas en oeuvre un unique système de mesure mesurant la position du moyen de manoeuvre.

Au contraire, le dispositif de commande électrique comporte deux systèmes de mesure dissimilaires qui mesurent chacun la position du moyen de manoeuvre.

La première mesure et la deuxième mesure peuvent transiter par deux chemins différents jusqu'à l'unité de traitement. La première mesure et la deuxième mesure sont comparées pour vérifier que les systèmes de mesures fonctionnent correctement.

Par exemple, chaque mesure peut être associée à un ordre à donner. Si la première mesure et la deuxième mesure sont relatives à deux ordres différents, l'unité de traitement en déduit la présence d'une incohérence.

De manière alternative, chaque valeur de la première mesure peut être associée à une valeur théorique que devrait atteindre la deuxième mesure. L'unité de traitement détermine alors si la deuxième mesure correspond à la valeur théorique mémorisée. Dans la négative, l'unité de traitement en déduit la présence d'une incohérence.

En cas d'incohérence, l'unité de traitement en déduit qu'un système de mesure est en panne. Dès lors, l'unité de traitement génère le signal de commande prédéterminé et mémorisé correspondant à la position neutre du moyen de manoeuvre. L'unité de traitement ignore donc les informations données par le premier système de mesure et le deuxième système de mesure.

En cas d'incohérence, un état d'invalidité peut aussi être généré pour déterminer si un signal correspondant à la position neutre a été envoyé suite à une incohérence ou suite au positionnement du moyen de manoeuvre dans cette position neutre.

De manière alternative, l'unité de traitement peut générer un signal de commande correspondant à la dernière mesure cohérente.

En cas d'incohérence, un état d'invalidité peut aussi être généré.

En l'absence d'incohérence, l'unité de traitement génère le signal de commande prédéterminé et mémorisé correspondant à la première mesure et à la deuxième mesure.

Cette caractéristique permet d'obtenir un dispositif visant à prévenir des modes communs de pannes, pour atteindre un niveau de fiabilité et de sécurité optimisé. Ainsi, le dispositif de commande électrique peut piloter une fonction importante d'un aéronef, telle qu'une poussée longitudinale sur un aéronef hybride à voilure tournante.

Par exemple, la première mesure et la deuxième mesure peuvent être prises en compte pour commander des actionneurs agissant sur la poussée longitudinale d'un aéronef selon une architecture de type commande (COM) et surveillance (MON) où les mesures élaborées par deux voies indépendantes doivent être en accord pour que l'action soit effectuée, ce ou ces actionneurs gelant leurs actions en cas de dissemblance entre les mesures reçues.

La disponibilité de mesures indépendantes et dissimilaires permet de passiver, par traitement logiciel aval via deux voies de calcul indépendantes, le dysfonctionnement de l'une d'elles sans entrainer de commande intempestive.

Par ailleurs, le dispositif de commande électrique peut comporter une ou plusieurs des caractéristiques qui suivent.

Ainsi, le premier système de mesure peut être un moyen délivrant la première mesure sous la forme d'un premier signal de type analogique, le deuxième système de mesure étant un moyen délivrant la deuxième mesure sous la forme d'un deuxième signal de type numérique.

Le premier système de mesure peut ainsi émettre un signal analogique. Dès lors, la première mesure peut avoir la forme d'un courant électrique présentant une tension électrique qui varie en fonction de la position du moyen de manoeuvre, par exemple dans une plage allant de 0 à 12 volts.

A l'inverse, le deuxième système de mesure délivre un signal numérique. La deuxième mesure peut ainsi être une mesure numérique, par exemple de type « binaire réfléchie ». Le deuxième système de mesure peut en effet appliquer un code de Gray.

Par exemple, le premier système de mesure peut comprendre un potentiomètre ou un capteur à effet Hall ou un capteur électrique actif de déplacements de rotation, la première mesure étant exprimée sous la forme d'un premier signal présentant une tension électrique dépendant de ladite position courante.

Un capteur électrique actif de déplacements de rotation est connu sous l'acronyme « RVDT » qui correspond à l'expression Anglaise « Rotary Variable Differential Transformer ».

Par ailleurs, le deuxième système de mesure peut comprendre une roue codeuse solidaire en rotation du moyen de manoeuvre et un système de traitement coopérant avec la roue codeuse pour déterminer une valeur binaire courante correspondant à ladite position courante, la deuxième mesure étant exprimée sous la forme d'un deuxième signal comprenant ladite valeur binaire.

Le système de traitement peut être un système optique ou magnétique usuel.

Une roue codeuse est un générateur de code binaire pur. Une roue codeuse permet de renvoyer un signal numérique qui dépend du déplacement effectué par la roue codeuse.

Par exemple, la roue codeuse se présente sous la forme d'une roue perforée. Le système de traitement génère un faisceau lumineux qui éclaire une face de mesure de la roue. Suivant la position de la roue, le faisceau lumineux traverse la roue par une perforation et atteint alors un capteur, ou s'interrompt contre la face de mesure de la roue. Lorsqu'un capteur détecte la présence d'un faisceau, ce capteur émet un signal électrique.

Par exemple et pour obtenir un signal numérique à trois bits, trois faisceaux et trois capteurs sont éventuellement utilisés. Un signal numérique comprenant un nombre de bits différents est envisageable, et par exemple un signal numérique à quatre bits.

Le degré de rotation d'une roue codeuse peut être encodé en code de Gray. Le code de Gray, également appelé « binaire réfléchi », permet de ne modifier qu'un seul bit quand un nombre est augmenté d'une unité pour éviter des états transitoires potentiellement gênants.

Selon un autre aspect, le dispositif de commande électrique peut comprendre un système de rappel tendant à rappeler le moyen de manoeuvre dans la position neutre.

Le système de rappel peut comprendre des ressorts ou des vérins à gaz miniatures associés à des butées mécaniques empêchant leur action au-delà du retour à la position neutre.

Ce système de rappel tend à rappeler mécaniquement et à maintenir dans la position neutre le moyen de manoeuvre. Par suite, lorsqu'un individu déplace le moyen de rappel, cet individu exerce un effort à l'encontre de l'effort exercé par le système de rappel. Lorsque cet individu relâche le moyen de manoeuvre, le système de rappel déplace le moyen de manoeuvre vers sa position neutre.

Dès lors, un dysfonctionnement du système de rappel n'entraine pas une rotation intempestive du moyen de manoeuvre ce qui peut s'avérer précieux lorsque le dispositif de commande électrique commande un système sensible d'un aéronef.

Par exemple, le système de rappel peut comporter un premier ressort et un deuxième ressort qui sont munis respectivement d'une première extrémité mobile et d'une deuxième extrémité mobile, ledit moyen de manoeuvre comprenant un élément agencé circonférentiellement entre la première extrémité mobile et la deuxième extrémité mobile, ledit système de rappel comprenant une butée, ledit premier ressort tendant à déplacer circonférentiellement selon un premier sens ladite première extrémité mobile contre la butée pour positionner l'organe de manoeuvre dans la position neutre, ledit deuxième ressort tendant à déplacer circonférentiellement selon un deuxième sens ladite deuxième extrémité mobile contre la butée pour positionner l'organe de manoeuvre dans la position neutre.

Selon un autre aspect, le dispositif de commande électrique peut comprendre un système de retenue tendant à retenir ledit moyen de manoeuvre dans au moins une position dite « indexée » par rapport au support.

Le système de retenue peut prendre la forme d'un système par crantage, par exemple muni d'une bille et d'un organe élastique. Le système de retenue peut donc être du type décrit dans le document FR 2984004.

De manière alternative ou complémentaire, le système de retenue peut être un système à friction. Un tel système à friction comporte un organe frottant contre le moyen de manoeuvre pour tendre à retenir le moyen de manoeuvre dans une position.

Le système de retenue peut définir plusieurs positions de commutation dans lesquelles peut se trouver le moyen de manoeuvre par rapport au support, chaque position engendrant théoriquement des mesures différentes à la fois pour la première mesure et la deuxième mesure.

Le système de retenue tend à retenir le moyen de manoeuvre dans chaque position. En cas de présence d'un système de rappel, le système de rappel fournit un effort de rappel sur le moyen de manoeuvre supérieur à l'effort de maintien exercé par le système de retenue. Ainsi, le système de retenue permet d'assurer le maintien en position du moyen de manoeuvre en cas de rupture du système de rappel. Le dysfonctionnement du système de rappel mécanique en position neutre n'entraîne donc pas la rotation intempestive du moyen de manoeuvre, même en présence de vibrations et en particulier dans un cockpit d'aéronef, du fait de l'action du système de retenue.

Selon un autre aspect, le dispositif de commande électrique peut présenter un premier ensemble muni du support ainsi que du moyen de manoeuvre et du premier système de mesure et du deuxième système de mesure, ladite unité de traitement étant fixée au premier ensemble en étant solidaire du support, ladite unité de traitement étant destinée à être reliée à au moins un calculateur indépendant physiquement du premier ensemble, ladite unité de traitement transmettant au calculateur ledit signal de commande, ledit signal de commande étant relatif à un paramètre dont la valeur est établie en fonction d'une position mesurée du moyen de manoeuvre lorsque la première mesure et la deuxième mesure correspondent chacune à ladite position mesurée ou de ladite position neutre lorsque la première mesure et la deuxième mesure ne correspondent pas à une même position du moyen de manoeuvre.

Le signal de commande peut aussi comprendre une information de validité. Dès lors, le signal de commande permet d'indiquer si un ordre relatif à ladite position neutre est un ordre donné volontairement ou un ordre résultant une incohérence.

Selon cette première variante, le moyen de manoeuvre, le premier système de mesure, le deuxième système de mesure et l'unité de traitement comparant les mesures sont intégrés dans un même équipement apte à transmettre un ordre de commande à au moins un calculateur d'un système de pilotage automatique par au moins un bus, par exemple de type CAN. Le dispositif de commande électrique est alors aisément intégrable dans un aéronef par exemple.

L'acronyme CAN correspond à l'expression anglaise « Controller Area Network » et désigne un type de bus particulier.

L'unité de traitement peut par exemple prendre la forme d'un circuit logique programmable. Un circuit logique programmable est un circuit intégré logique qui peut être reprogrammé après sa fabrication. Un tel réseau comprend de nombreuses cellules logiques élémentaires et de bascules logiques librement connectables. Un circuit logique programmable peut prendre la forme d'un composant électronique connu sous l'acronyme « FPGA » correspondant à l'expression anglaise « field-programmable gate array ».

Par exemple, l'unité de traitement génère et transmet le signal de commande au calculateur d'un système de pilotage automatique pour contrôler un système propulsif d'un aéronef.

Selon une deuxième variante, le dispositif de commande électrique présente un premier ensemble muni du support ainsi que du moyen de manoeuvre et du premier système de mesure et du deuxième système de mesure, ladite unité de traitement n'étant pas fixée au premier ensemble, l'unité de traitement étant déportée par rapport à ce premier ensemble, ladite unité de traitement étant reliée au premier ensemble éventuellement par au moins un bus, ledit bus étant relié au premier système de mesure et au deuxième système de mesure, ladite unité de traitement transmettant au calculateur ledit signal de commande, ledit signal de commande étant relatif à un paramètre dont la valeur est établie en fonction d'une position mesurée du moyen de manoeuvre lorsque la première mesure et la deuxième mesure correspondent chacune à ladite position mesurée ou de ladite position neutre lorsque la première mesure et la deuxième mesure ne correspondent pas à une même position du moyen de manoeuvre.

Selon cette deuxième variante, le moyen de manoeuvre, le premier système de mesure, le deuxième système de mesure sont intégrés dans un même équipement. Cet équipement est alors relié à une unité de traitement déportée, par exemple par un bus CAN ou des connections filaires.

Par exemple, l'unité de traitement est une partie intégrante d'un système de pilotage automatique qui contrôle un système propulsif d'un aéronef.

Outre un dispositif de commande électrique, l'invention vise un aéronef muni d'au moins un rotor principal participant au moins partiellement à la sustentation de l'aéronef, cet aéronef comprenant au moins un système propulsif distinct du rotor principal, le système propulsif générant une poussée dite « poussée additionnelle » pour au moins participer à la mise à l'avancement de l'aéronef.

Cet aéronef comporte un dispositif de commande électrique selon l'invention, le dispositif de commande électrique étant relié au système propulsif pour contrôler au moins partiellement ladite poussée additionnelle, le signal de commande requérant un taux de variation de ladite poussée additionnelle transmis au système propulsif.

Par exemple, le moyen de manoeuvre est monté sur un levier de pas collectif contrôlant collectivement le pas des pales du rotor principal.

En outre, le système propulsif peut comprendre au moins une hélice, et un système de modification du pas modifiant le pas des pales de cette hélice.

Dès lors et selon la variante, l'unité de traitement peut être reliée à un système de pilotage automatique du système propulsif, ou peut être une partie d'un tel système de pilotage automatique en étant reliée au système de modification du pas qui agit sur le pas des pales des hélices.

Indépendamment de la variante, la manoeuvre du moyen de manoeuvre n'induit pas la génération d'une commande tout ou rien se contentant de commander une augmentation ou une réduction de la poussée additionnelle. En effet, la manoeuvre du moyen de manoeuvre induit la génération d'un signal de commande pilotant un taux de variation de cette poussée additionnelle.

Le taux de variation peut être directement un taux de variation de la poussée additionnelle exprimée par exemple exprimé en watts par seconde, ou encore un taux de variation du pas des pales des hélices générant ladite poussée exprimée en degrés de pas par seconde.

Ce dispositif de commande électrique permet ainsi de piloter finement la vitesse de variation de la poussée additionnelle.

L'aéronef peut de plus comporter une ou plusieurs des caractéristiques qui suivent.

Ainsi et selon une variante, le système propulsif comprenant au moins une hélice comprenant une pluralité de pales à pas variable, le système propulsif comprenant un système de modification de pas pour modifier ledit pas, l'unité de traitement est reliée au système de modification de pas.

Selon un autre aspect, l'aéronef peut comporter un organe de manoeuvre électrique de secours relié au système propulsif, pour requérir un taux de variation nul de la poussée additionnelle ou pour positionner le pas moyen des pales des hélices dans une position prédéterminée. Le positionnement des pales des hélices dans une position de refuge permet d'optimiser la charge de travail du pilote.

Cet organe de manoeuvre électrique de secours peut prévaloir sur le dispositif de commande électrique et est indépendant du moyen de manoeuvre, ce moyen de manoeuvre étant inhibé lorsque l'organe de manoeuvre électrique de secours est manoeuvré.

Pour éviter un appui intempestif sur l'organe de manoeuvre électrique de secours, un dispositif mécanique de protection du moyen de manoeuvre peut être appliqué. Une commande avionique peut aussi être utilisée pour désinhiber la fonction.

Selon la variante, l'organe de manoeuvre électrique de secours peut être relié à un calculateur communiquant avec l'unité de traitement, ou encore à l'unité de traitement.

L'organe de manoeuvre électrique de secours peut être sollicité lors de phases de vol en autorotation, ou en cas de grippage du moyen de manoeuvre.

La mise en oeuvre de l'organe de manoeuvre électrique de secours permet de surpasser la commande reçue de ce moyen de manoeuvre et d'imposer un retour vers une position de commande de poussée refuge.

Selon un autre aspect, l'aéronef peut comporter un organe de manoeuvre mécanique de secours relié au système propulsif.

Par exemple, cet organe de manoeuvre mécanique de secours prend la forme d'un levier agissant sur une chaîne de transmission de puissance reliée à une servocommande pilotant la poussée additionnelle, par exemple en pilotant le pas des pales d'une hélice.

L'invention vise de plus, un procédé pour commander un système propulsif d'un aéronef.

Ce procédé comporte les étapes suivantes :
- génération de la première mesure et de la deuxième mesure,
- comparaison de la première mesure et de la deuxième mesure,
- génération d'un taux de variation, de la poussée additionnelle ou du pas de pales d'hélices du système propulsif, pour piloter la poussée additionnelle en fonction de la position dudit moyen de manoeuvre par rapport à une référence, ledit taux de variation étant généré en fonction d'une position dite « position mesurée » du moyen de manoeuvre lorsque la première mesure et la deuxième mesure correspondent simultanément à ladite position mesurée du moyen de manoeuvre, ledit taux de variation étant réglé à zéro lorsque la première mesure et la deuxième mesure ne correspondent pas à une même position du moyen de manoeuvre.

Dans le cas d'une incohérence entre la première mesure et la deuxième mesure, une alarme visuelle ou sonore peut être émise par un système d'alarme.

Ce procédé peut de plus comporter une ou plusieurs des étapes suivantes.

Par exemple, l'étape de comparaison de la première mesure et de la deuxième mesure peut comporter les phases suivantes :
- détermination d'un premier taux de variation correspondant à la première mesure en utilisant une loi donnant ledit premier taux de variation en fonction de la première mesure,
- détermination d'un deuxième taux de variation correspondant à la deuxième mesure en utilisant une loi donnant ledit deuxième taux de variation en fonction de la deuxième mesure,
- comparaison du premier taux de variation et du deuxième taux de variation.

De manière alternative, le procédé peut comparer la première mesure à une valeur théorique de la deuxième mesure.

Par exemple, lorsque la première mesure présentant une tension électrique comprise respectivement entre 10. 285 et 12 Volts, 8.571 et 10.285 Volts, 6.857 et 8.571 Volts, 5.142 et 6.857 Volts, 3.428 et 5.142 Volts, 1.714 et 3.428 Volts, et entre 0 et 1.714 Volt, la deuxième mesure devrait présenter une valeur binaire respectivement égale à 001, 011, 010, 110, 111, 101, 100.

Dans la négative, le taux de variation est considéré comme étant nul.

Dans l'affirmative, le taux de variation est égal au taux de variation correspondant à la valeur de la première mesure ou de la deuxième mesure. Par exemple, le taux de variation est égal au taux de variation correspondant à la valeur de la première mesure, la seconde mesure servant à surveiller le système.

Indépendamment de la réalisation, l'unité de traitement peut donc appliquer au moins une loi mémorisée dans l'unité de traitement pour comparer la première mesure et la deuxième mesure. Une loi peut prendre la forme d'une ou plusieurs relations mathématiques ou encore d'un tableau de valeurs par exemple.

Selon un autre aspect, le procédé peut comporter une étape de positionnement d'un pas moyen des pales de chaque hélice dans une position prédéterminée lorsqu'un organe de manoeuvre électrique de secours est manoeuvré par un pilote.

Selon un autre aspect, le système propulsif pouvant comprendre au moins une hélice comprenant une pluralité de pales à pas variable, ledit système propulsif pouvant comprendre un système de modification de pas pour modifier ledit pas variable, ledit taux de variation est un taux de variation dudit pas desdites pales de l'hélice, ledit procédé comportant une étape de modification dudit pas en appliquant ledit taux de variation dudit pas.

L'invention et ses avantages apparaîtront avec plus de détails dans le cadre de la description qui suit avec des exemples donnés à titre illustratif en référence aux figures annexées qui représentent :
- les figures 1 à 5, des schémas présentant un dispositif de commande électrique selon l'invention,
- la figure 6, une vue d'un aéronef selon l'invention,
- la figure 7, un schéma explicitant les commandes de vol de cet aéronef, et
- la figure 8, un schéma explicitant le procédé selon l'invention.

Les éléments présents dans plusieurs figures distinctes sont affectés d'une seule et même référence.

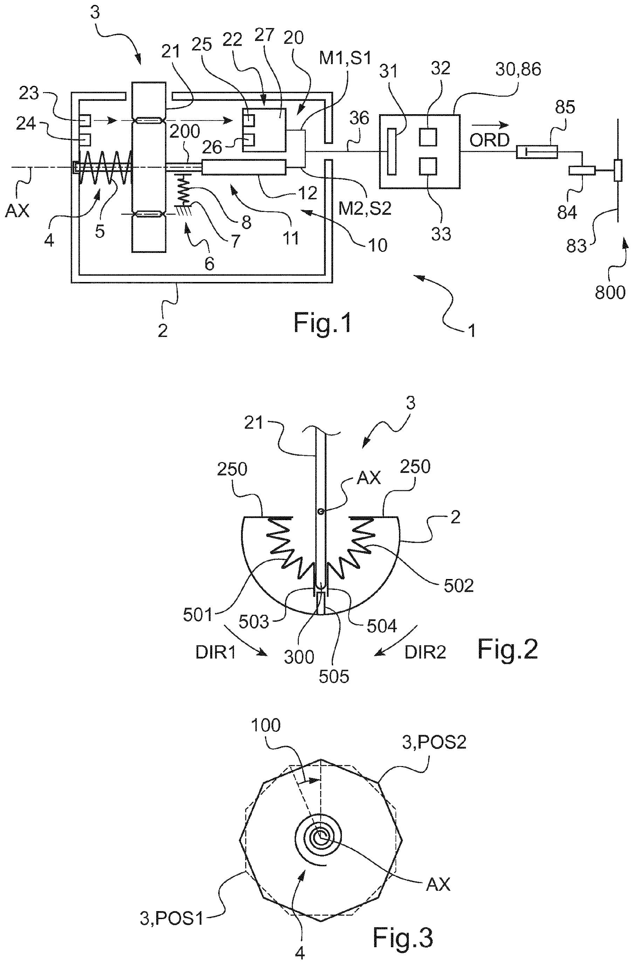

La figure 1 présente un dispositif de commande électrique 1.

Ce dispositif de commande électrique 1 est muni d'un support 2 portant un moyen de manoeuvre 3. Le moyen de manoeuvre 3 est relié au support 2 par un système de fixation conférant une liberté de mouvement au moyen de manoeuvre 3 par rapport au support 2.

Par exemple, le moyen de manoeuvre 3 comprend une molette mobile en rotation autour d'un axe de manoeuvre AX qui est immobile par rapport au support 2. Le système de fixation peut alors prendre la forme d'une tige 200 solidaire de la molette et portée par des paliers solidaires du support 2

Une telle molette peut comprendre une circonférence pourvue de moyens de préhension pour favoriser son déplacement par une action manuelle d'un individu. La molette peut être du type du document FR 2984004.

Par ailleurs, le dispositif de commande électrique 1 peut être muni d'un système de rappel 4. Un tel système de rappel 4 a pour fonction de tendre à rappeler le moyen de manoeuvre 3 dans une position de référence dite « position neutre POS1 ».

Un tel système de rappel 4 peut par exemple comprendre au moins un ressort 5 ou au moins un vérin à gaz.

La figure 2 illustre un moyen de manoeuvre 3 rotatif. Ce moyen de manoeuvre 3 comprend un élément 300 coincé circonférentiellement entre deux extrémités mobiles de deux ressorts 501, 502 du système de rappel.

Ainsi, un premier ressort 501 s'étend selon un premier sens DIR1 sur un arc de cercle entre un siège 250 solidaire du support 2 jusqu'à une première extrémité mobile 503. De même, le deuxième ressort 502 s'étend selon un deuxième sens DIR2, opposé au premier sens DIR1, sur un arc de cercle entre un siège 250 solidaire du support 2 jusqu'à une deuxième extrémité mobile 503.

En outre, le système de rappel 4 comporte une butée 505. La butée 505 comporte une première face de contact apte à bloquer l'extension selon le premier sens DIR1 du premier ressort 501 par interférence avec la première extrémité mobile 503, et une deuxième face de contact apte à bloquer l'extension du deuxième ressort 502 selon le deuxième sens DIR2 par interférence avec la deuxième extrémité mobile 504. La butée prend par exemple la forme d'un épaulement du support 2.

Cette butée est en outre localisée au droit de la position que doit atteindre l'élément 300 dans la position neutre.

Par suite, suite à une rotation de l'organe de manoeuvre dans le deuxième sens DIR2, l'élément 3 tend à comprimer le premier ressort 501. Lorsqu'un pilote n'exerce plus d'effort sur l'organe de manoeuvre 3, le premier ressort 501 s'étire et repositionne l'organe de manoeuvre 3 dans sa position neutre, même en cas de défaut du deuxième ressort 502 puisque la rotation de l'organe de manoeuvre s'arrête lorsque la première extrémité mobile 503 atteint la butée 505.

A l'inverse, suite à une rotation de l'organe de manoeuvre dans le premier sens DIR1, l'élément 3 tend à comprimer le deuxième ressort 502. Lorsqu'un pilote n'exerce plus d'effort sur l'organe de manoeuvre 3, le deuxième ressort 502 s'étire et repositionne l'organe de manoeuvre 3 dans sa position neutre, même en cas de défaut du premier ressort 501 puisque la rotation de l'organe de manoeuvre 3 s'arrête lorsque la deuxième extrémité mobile 504 atteint la butée 505.

Selon un autre aspect et en référence à la figure 1, le dispositif de commande électrique 1 peut comprendre un système de retenue 6. Ce système de retenue 6 a pour fonction de tendre à retenir le moyen de manoeuvre 3 dans au moins une position dite « indexée » par rapport au support 2.

En effet, le moyen de manoeuvre 3 peut être positionné dans une pluralité de positions de commutation indexées distinctes et différentes de la position neutre. Le système de retenue 6 tend alors à maintenir le moyen de manoeuvre 3 dans chaque position de commutation.

En référence à la figure 3, un individu déplace alors le moyen de manoeuvre 3 de la position neutre POS1 vers une position courante POS2 pour donner un ordre à un système, tel qu'un système propulsif d'un aéronef.

Le moyen de manoeuvre 3 effectue alors selon cet exemple une rotation d'un angle 100 autour de son axe de manoeuvre AX.

La position angulaire du moyen de manoeuvre 3 par rapport à la position neutre conditionne l'ordre donné par le dispositif de commande électrique 1 à un système.

Lorsque l'individu relâche le moyen de manoeuvre 3, le système de rappel 4 ramène le moyen de manoeuvre 3 dans la position neutre POS1. En cas de dysfonctionnement du système de rappel, le système de retenue tend à maintenir le moyen de manoeuvre dans la position atteinte.

Selon l'exemple de la figure 1, le système de retenue 6 peut prendre la forme d'un système à friction. Un tel système à friction peut par exemple comprendre un organe élastique 7 tendant à plaquer un patin 8 contre un organe solidaire en rotation du moyen de manoeuvre 3

De manière alternative, un système à crans peut être envisagé, tel qu'un système comprenant une bille et des logements ménagés dans un anneau du moyen de manoeuvre 3. Un organe élastique tend alors à positionner une bille dans un logement.

En référence à la figure 1, le dispositif de commande électrique 1 comporte deux moyens de mesure mesurant chacun la position du moyen de manoeuvre.

Ainsi, le dispositif de commande électrique 1 comprend un premier système de mesure 10 qui réalise une première mesure représentant la position courante du moyen de manoeuvre 3. Ce premier système de mesure 10 est fixé au support 2.

De plus, le dispositif de commande électrique 1 comprend un deuxième système de mesure 20 qui réalise une deuxième mesure représentant aussi cette position courante POS2.

Le premier système de mesure 10 et le deuxième système de mesure 20 sont indépendants et dissimilaires. Chaque système de mesure effectue donc une mesure indépendamment de l'autre système de mesure.

Par exemple, le premier système de mesure 10 est un moyen délivrant la première mesure sous la forme d'un premier signal S1 de type analogique.

Un tel premier système de mesure 10 comprend selon la figure 1 un potentiomètre 11 intégré à un circuit électronique 12. Un déplacement du moyen de manoeuvre 3 induit une variation de la résistance du potentiomètre 11. Dès lors, le circuit électronique 12 délivre une première mesure M1 prenant la forme d'un premier signal S1 électrique ayant une tension électrique dépendant de la position du moyen de manoeuvre 3.

Par exemple, la première mesure M1 a la forme d'un premier signal S1 présentant une tension électrique comprise entre 10.285 et 12 Volts, 8.571 et 10. 285 Volts, 6.857 et 8.571 Volts, 5.142 et 6.857 Volts, 3.428 et 5.142 Volts, 1.714 et 3.428 Volts, ou entre 0 et 1.714 Volt en fonction de la position du moyen de manoeuvre 3 et donc de la position de la borne mobile du potentiomètre 11.

De manière alternative au potentiomètre, le premier système de mesure peut comprendre un capteur à effet hall ou un capteur électrique actif de déplacements de rotation RVDT.

Par ailleurs, le deuxième système de mesure 20 peut délivrer la deuxième mesure M2 sous la forme d'un deuxième signal S2 non pas analogique mais de type numérique. Ce deuxième système de mesure 20 est fixé au support 2.

Par exemple, le deuxième système de mesure 20 comprend une roue codeuse 21. De plus, le deuxième système de mesure 20 comprend un système de traitement 22 qui coopère avec ladite roue codeuse 21 pour déterminer une valeur binaire courante correspondant à ladite position courante POS2.

La roue codeuse 21 est solidaire en rotation du moyen de manoeuvre 3. Par exemple, la roue codeuse peut prendre la forme d'un corps d'une molette du moyen de manoeuvre. Ce corps peut comprendre des perforations angulaires pour générer une valeur binaire.

Dès lors, le système de traitement peut comprendre des générateurs de faisceaux optiques 23, 24, un capteur 25, 26 par générateur de faisceau optique 23, 24, et une unité de calcul 27. La figure 1 illustre deux générateurs de faisceaux optiques. Néanmoins, le système de traitement comprend un générateur de faisceau optique par bit du signal à produire.

Lorsque le faisceau traverse une perforation et atteint un capteur, le système de traitement peut attribuer la valeur 1 au bit correspondant de la deuxième mesure. A l'inverse, si aucune perforation n'est en face d'un faisceau et n'atteint pas un capteur, le système de traitement peut attribuer la valeur 0 au bit correspondant.

Par exemple, la deuxième mesure M2 a la forme d'un deuxième signal S2 ayant une valeur binaire à 3 bits respectivement égale à 001, 011, 010, 110, 111, 101, 100 en fonction de la position du moyen de manoeuvre 3.

Pour analyser les mesures, le dispositif de commande électrique 1 comprend une unité de traitement 30.

Cette unité de traitement 30 peut comprendre une entrée 31 recevant le premier signal S1 et le deuxième signal S2 porteurs respectivement de la première mesure M1 et de la deuxième mesure M2.

De plus, l'unité de traitement 30 peut comprendre au moins une sortie pour émettre vers un système un signal de commande ORD. En outre, l'unité de traitement 30 peut par exemple comprendre un processeur 32 exécutant des instructions mémorisées sur une mémoire 33.

De manière alternative ou complémentaire, l'unité de traitement peut comprendre un circuit intégré, un système programmable, un circuit logique, ces exemples ne limitant pas la portée donnée à l'expression « unité de traitement ».

Indépendamment de sa réalisation, l'unité de traitement 30 a pour fonction de comparer la première mesure M1 et la deuxième mesure M2 pour générer un signal de commande ORD.

L'unité de traitement 30 estime que le moyen de manoeuvre 3 est dans la position neutre POS1 lorsque la première mesure et la deuxième mesure ne correspondent pas à une même position du moyen de manoeuvre, éventuellement à une tolérance de seuil près. L'unité de traitement génère alors un signal de commande ORD prédéterminé correspondant notamment à cette position neutre.

A l'inverse, lorsque la première mesure et la deuxième mesure correspondent à une même position particulière du moyen de manoeuvre 3, l'unité de traitement génère alors un signal de commande ORD prédéterminée correspondant notamment à cette position particulière.

Selon la première variante de la figure 1, l'unité de traitement est située à l'extérieur d'un premier ensemble muni du support 2 ainsi que du moyen de manoeuvre 3 et du premier système de mesure 10 et du deuxième système de mesure 20.

Contrairement au moyen de manoeuvre 3 ainsi qu'au premier système de mesure 10 et au deuxième système de mesure 20, l'unité de traitement 30 n'est pas fixée au support 2. L'unité de traitement est donc déportée par rapport au premier ensemble.

Dès lors, le premier système de mesure 10 et le deuxième système de mesure 20 sont par exemple reliés à au moins un bus 36 débouchant notamment sur l'unité de traitement 30. Un tel bus 36 peut être un bus CAN.

Par exemple, l'unité de traitement 30 est une partie d'un calculateur 86 d'un système de pilotage automatique contrôlant le pas des pales 83 d'au moins une hélice 800.

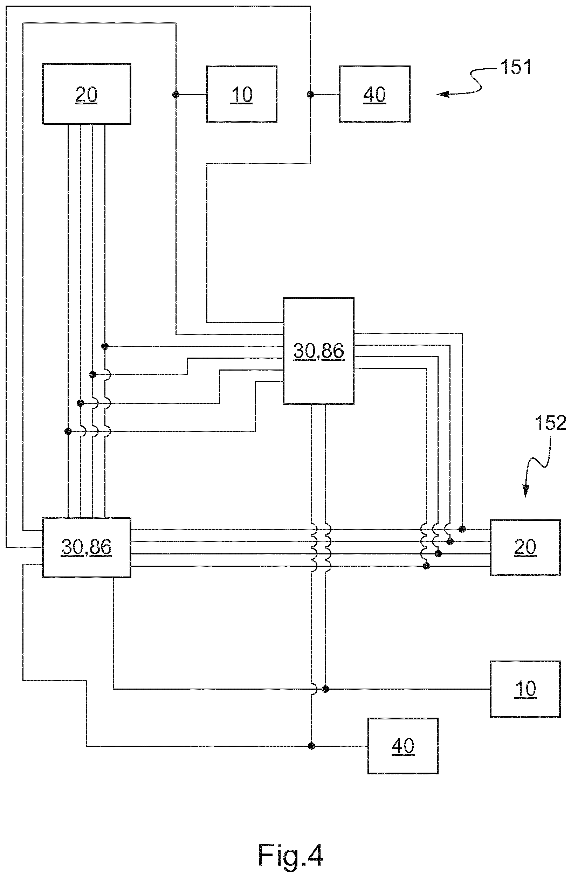

Selon une alternative illustrée sur la figure 4, le premier système de mesure 10 et le deuxième système de mesure 20 sont par exemple reliés à plusieurs unités de traitement 30.

Cette figure 4 présente en effet une architecture munie de deux dispositif de commande 151, 152 par exemple destinés respectivement à un pilote et à un copilote.

Chaque dispositif de commande comprend un premier moyen de mesure 10, un deuxième moyen de mesure 20 et une unité de traitement 30. Une telle unité de traitement peut comprendre un calculateur.

Par exemple, un tel calculateur peut être un calculateur dual qui comprend deux voies. Chacune des voies comprend son propre microprocesseur. Une des deux voies peut servir à la génération de la commande COM pouvant être inhibée du fait de la détection d'incohérence grâce à la communication de la première voie et de la seconde voie.

Dès lors, chaque moyen de mesure 10, 20 est relié à chaque unité de traitement par deux liaisons. Les liaisons représentées sont des liaisons filaires, mais peuvent comprendre des bus et notamment des bus CAN.

Les unités de traitement peuvent de plus être reliées l'une à l'autre.

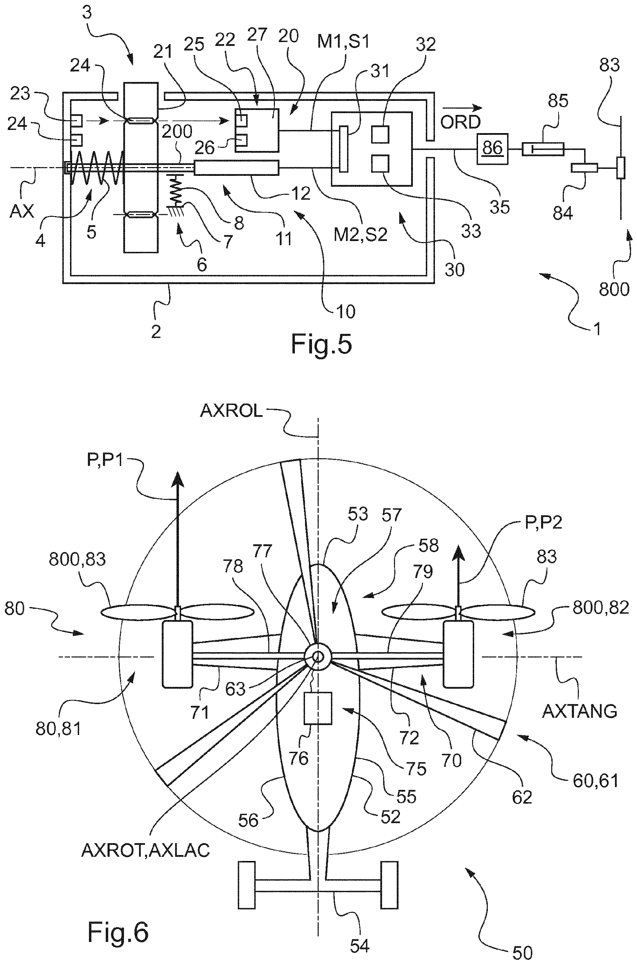

Selon la deuxième variante de la figure 5, l'unité de traitement 30 est une partie du premier ensemble en étant fixée au support 2. Par exemple, l'unité de traitement 30 prend la forme d'un circuit logique FPGA.

L'unité de traitement 30 est ainsi reliée au premier système de mesure 10 et au deuxième système de mesure 20. De plus, l'unité de traitement 30 peut être reliée au système à commander par exemple par au moins un bus 35, tel qu'un bus CAN. Par exemple, l'unité de traitement 30 est reliée par au moins un bus CAN à au moins un calculateur 86 d'un système de pilotage automatique contrôlant le pas des pales 83 d'au moins une hélice 800.

Par exemple, dans une architecture duplex, l'unité de traitement 30 peut être reliée par deux bus CAN à deux calculateurs 86, chaque calculateur coopérant avec une unité de surveillance.

L'unité de traitement 30 peut aussi être reliée par deux voies un calculateur 86 dual. La surveillance, même si possible entre deux calculateurs d'une architecture duplex, peut se faire entre deux voies duales d'un même calculateur.

Par ailleurs, l'unité de traitement émet un signal de commande via chaque bus 35 vers chaque calculateur 86. Toutefois, l'unité de traitement peut aussi transmettre la première mesure et la deuxième mesure à ce calculateur, voire le résultat de la comparaison effectuée. Ainsi, le calculateur peut vérifier que le signal de commande ORD émis est correct en effectuant la même comparaison que l'unité de traitement.

En référence à la figure 6, le dispositif de commande électrique 1 selon l'invention peut être agencé sur un aéronef à voilure tournante, à savoir un giravion 50.

Le giravion 50 comporte un fuselage 52. Le fuselage 52 s'étend longitudinalement d'une queue 54 vers un nez 53 le long d'un axe de roulis AXROL. De plus, le fuselage s'étend transversalement d'un premier flanc, dit « flanc gauche 56 » par commodité, vers un deuxième flanc, dit « flanc droit 55 » par commodité, le long d'un axe de tangage AXTANG. Enfin, le fuselage s'étend en élévation d'une surface inférieure 58 vers une surface supérieure 57 le long d'un axe de lacet AXLAC.

L'axe de roulis AXROL et l'axe de lacet AXLAC définissent conjointement un plan antéropostérieur vertical de symétrie du giravion 1.

Classiquement, un train d'atterrissage peut saillir vers le bas de la surface inférieure 58 du fuselage.

Le giravion comporte une voilure tournante 60 comprenant au moins un rotor principal 61. Ce rotor principal 61 surplombe la surface supérieure 57 du fuselage 52. Le rotor principal 61 est pourvu d'une pluralité de pales 62 reliées par exemple à un moyeu 63. Ces pales 62 sont dites « pales principales » par commodité.

Le rotor principal effectue une rotation autour d'un axe dénommé « axe de rotation principal AXROT » pour participer au moins partiellement à la sustentation voire à la propulsion du giravion. Cet axe de rotation principal peut être immobile par rapport au fuselage 52.

Par ailleurs, le giravion 1 peut comporter un système propulsif 80 procurant une poussée additionnelle longitudinale P pour participer au déplacement de ce giravion. Le système propulsif 80 peut tendre à propulser ou à tracter le giravion.

Ce système propulsif 80 peut comprendre au moins une hélice 800 comprenant une pluralité de pales 83 à pas variable.

Par exemple, le giravion possède alors une surface sustentatrice 70 qui s'étend sensiblement transversalement de part et d'autre du fuselage. Cette surface sustentatrice 70 peut par exemple comprendre une demi-aile gauche 71 s'étendant à partir du flanc gauche 56 et une demi-aile droite 72 s'étendant à partir du flanc droit 55.

La surface sustentatrice porte alors une hélice 800 dite « première hélice 81 » et une hélice 800 dite « deuxième hélice 82 ». Par exemple, la demi-aile gauche 71 porte la première hélice 81, et la demi-aile droite 72 porte la deuxième hélice 82. La première hélice 81 et la deuxième hélice 82 sont donc agencées transversalement de part et d'autre du fuselage 52.

Chaque hélice produit une poussée P1, P2 générant conjointement la poussée additionnelle P. La première poussée P1 générée par la première hélice 81 peut différer de la deuxième poussée P2 générée par la deuxième hélice 82 pour le contrôle du mouvement en lacet du giravion.

Par ailleurs, le giravion 1 comporte une installation motrice 75 pour mettre en mouvement la première hélice 81, la deuxième hélice 82 et le rotor principal 60.

Une telle installation motrice 75 peut comporter au moins un moteur 76 et une chaîne mécanique reliant le moteur à la première hélice 81 ainsi qu'à la deuxième hélice 82 et au rotor principal 60.

Par exemple, la chaîne mécanique inclut une boîte de transmission de puissance 77 munie d'un mât rotor entraînant en rotation le rotor principal. De plus, cette boîte de transmission peut être reliée à une première chaîne de transmission 78 de puissance entraînant en rotation la première hélice 81. De même, cette boîte de transmission peut être reliée à une deuxième chaîne de transmission 79 de puissance entraînant en rotation la deuxième hélice 82.

D'autres architectures sont envisageables.

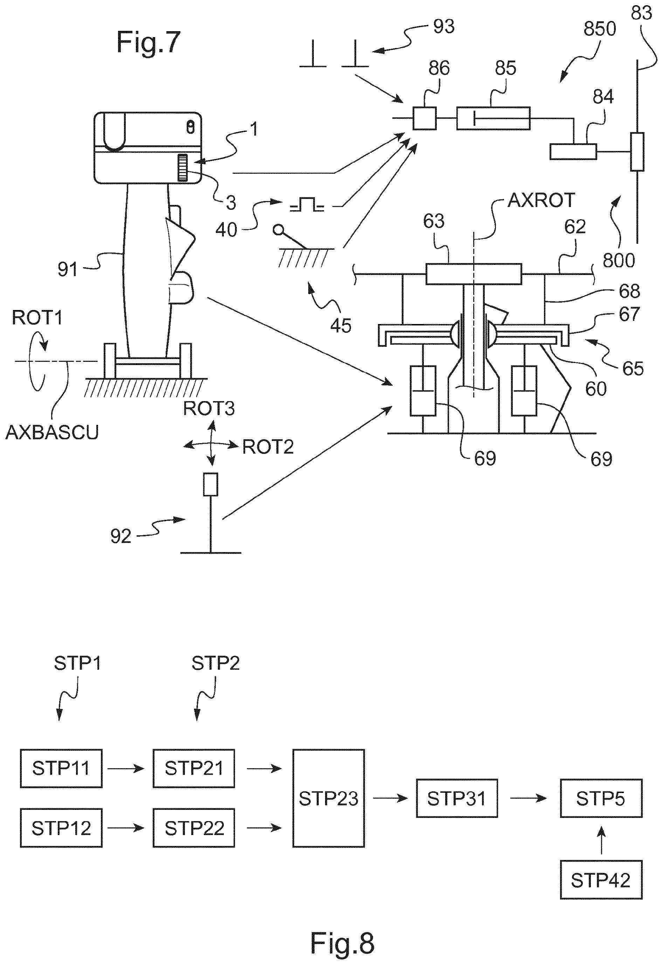

En référence à la figure 7, le giravion 50 comporte de multiples commandes de vol pour commander le déplacement de ce giravion.

En effet, le pas des pales du rotor principal peut être modifié collectivement et cycliquement.

Par exemple, le giravion comprend un ensemble de plateaux cycliques 65 muni d'un plateau non tournant 66 et d'un plateau tournant 67. Le plateau non tournant 66 est relié à au moins trois actionneurs dit « actionneurs principaux 69 » de type servocommande par exemple. Le plateau tournant 67 est relié à chaque pale 62 du rotor principal par respectivement une bielle de pas 68.

Dès lors, le giravion peut comprendre un levier de pas collectif 91. Ce levier de pas collectif 91 peut effectuer une rotation ROT 1 autour d'un axe de basculement AXBASCU pour piloter les actionneurs principaux de la même manière.

De plus, le giravion peut comprendre un manche cyclique 92. Ce manche cyclique 92 peut effectuer une rotation ROT2 autour d'un premier axe et une rotation ROT3 autour d'un deuxième axe pour piloter les actionneurs principaux de manière différente afin de contrôler l'assiette du giravion.

En outre, le pas des pales 83 de chaque hélice 800 peut être modifié par un système de modification de pas 850.

A titre illustratif, un système de modification de pas 850 d'une hélice peut comprendre un distributeur hydraulique 84 alimentant hydrauliquement un vérin. Ce vérin peut être agencé dans un moyeu de l'hélice par un arbre long perforé. Ce distributeur hydraulique 84 peut être piloté par une chaîne de transmission de puissance incluant un vérin électrique 85 par exemple. Ce vérin électrique peut être commandé par un calculateur 86.

Un palonnier 93 peut communiquer avec le calculateur 86, pour piloter le mouvement en lacet de l'aéronef au travers d'une différence de poussée entre la première poussée exercée par la première hélice et la deuxième poussée exercée par la deuxième hélice.

Pour piloter la norme de la poussée additionnelle, un dispositif de commande électrique 1 selon l'invention peut être implémenté. Par exemple, le moyen de manoeuvre 3 est agencé sur le levier de pas collectif 91.

Dès lors, le signal de commande émis par le dispositif de commande électrique 1 peut être un signal de commande d'un taux de variation de la poussée additionnelle. Lorsqu'un pilote manoeuvre le moyen de manoeuvre 3, le dispositif de commande électrique 1 requiert la variation de la poussée additionnelle selon un taux de variation négatif ou positif. Le calculateur 86 ordonne alors aux systèmes de modification de pas 850 des hélices de modifier le pas des pales des hélices selon ce taux de variation.

Par exemple, le calculateur applique au moins une relation mathématique ou sollicite une base de données pour générer les ordres de modification du pas des pales des hélices correspondant au taux de variation de pas requis par le dispositif de commande électrique 1.

En effet, le positionnement du pas des hélices peut être asservi via, d'une part la génération d'une commande transmise au calculateur 86 et, d'autre part d'un capteur de position mesurant une information relative au pas d'une pale. Un tel capteur de position peut être relié au calculateur 86. De plus le capteur de position peut être et agencé au plus près des pales, par exemple au niveau d'un distributeur hydraulique 84. Le calculateur 86 contrôle alors le vérin électrique 85 pour respecter la commande reçue au regard d'un retour d'information donné par le capteur de position.

Par ailleurs, l'aéronef 50 peut comporter un organe de manoeuvre électrique de secours 40 relié au système propulsif 80. Par exemple, cet organe de manoeuvre électrique de secours 40 prend la forme d'un bouton poussoir relié au calculateur 86.

Selon un autre aspect, l'aéronef 50 peut comporter un organe de manoeuvre mécanique de secours 45 relié au système propulsif. Un tel organe de manoeuvre mécanique de secours 45 peut comprendre un levier déplaçant le vérin électrique 85 par exemple.

La figure 8 illustre le procédé mis en oeuvre par cet aéronef.

Durant une première étape STP1, un individu peut manoeuvrer le moyen de manoeuvre 3 pour générer une modification de la poussée additionnelle.

Durant une première étape de mesure STP11 le premier système de mesure génère la première mesure M1. Durant une deuxième étape de mesure STP12, le deuxième système de mesure génère la deuxième mesure M2.

Durant une étape de comparaison STP2, la première mesure et la deuxième mesure sont comparées l'une à l'autre.

Selon une réalisation, durant une première phase STP21 de l'étape de comparaison STP2, un premier taux de variation, relatif à une variation de la poussée additionnelle correspondant à la première mesure, est déterminé en utilisant une première loi donnant ledit premier taux de variation en fonction de la première mesure.

Durant une deuxième phase STP22 de l'étape de comparaison STP2, un deuxième taux de variation, relatif à une variation de la poussée additionnelle correspondant à la deuxième mesure, est déterminé en utilisant une deuxième loi donnant ledit deuxième taux de variation en fonction de la deuxième mesure.

Dès lors, la comparaison s'opère en comparant le premier taux de variation et le deuxième taux de variation durant une phase de comparaison STP23. Cette comparaison permet de déterminer si la première mesure et la deuxième mesure correspondent simultanément à une même position mesurée du moyen de manoeuvre 3, ou si la première mesure et la deuxième mesure ne correspondent pas à une même position.

Durant une troisième étape STP3, un taux de variation d'une poussée est généré pour piloter la poussée additionnelle P en fonction de la position du moyen de manoeuvre 3 par rapport à une référence.

Le taux de variation est généré en fonction d'une position dite « position mesurée » du moyen de manoeuvre 3 lorsque la première mesure et la deuxième mesure correspondent simultanément à ladite position mesurée, ledit taux de variation étant réglé à zéro lorsque la première mesure et la deuxième mesure ne correspondent pas à une même position.

Le cas échéant, si le premier taux de variation est égal au deuxième taux de variation, le taux de variation généré pour piloter la poussée additionnelle P est égal à la valeur de ces premier et deuxième taux de variation.

Par contre, lorsque le premier taux de variation n'est pas égal au deuxième taux de variation, le taux de variation généré pour piloter la poussée additionnelle P est égal à zéro.

Durant une étape de modification de la poussée STP5, le taux de variation élaboré lors de la troisième étape STP3 est transmis au système propulsif pour piloter la norme de la poussée additionnelle. Le cas échéant, une étape de modification du pas des pales des hélices est mise en oeuvre en appliquant ledit taux de variation.

Ce procédé peut de plus comporter une étape STP4 de positionnement d'un pas moyen des pales des hélices dans une position prédéterminée lorsqu'un organe de manoeuvre électrique de secours 40 est manoeuvré par un pilote.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de commande électrique (1) muni d'un moyen de manoeuvre (3) et d'un support (2), le moyen de manoeuvre (3) étant mobile par rapport à ce support (2), ledit moyen de manoeuvre (3) étant destiné à être déplacé par rapport au support (2) par un individu, ledit dispositif de commande électrique (1) comprenant un premier système de mesure (10) qui réalise une première mesure d'une position courante (POS2) du moyen de manoeuvre (3) par rapport à une position neutre, ledit dispositif de commande électrique (1) comprenant un deuxième système de mesure (20), le premier système de mesure (10) et le deuxième système de mesure (20) étant indépendants et dissimilaires, le dispositif de commande électrique (1) comprenant une unité de traitement (30), **caractérisé en ce que** le deuxième système de mesure (20) réalise une deuxième mesure de ladite position courante (POS2), et **en ce que** l'unité de traitement (30) compare la première mesure et la deuxième mesure pour générer un signal de commande (ORD) en fonction de ladite position courante (POS2), ladite unité de traitement (30) considérant que le moyen de manoeuvre (3) est dans ladite position neutre (POS1) lorsque la première mesure et la deuxième mesure ne correspondent pas à une même position du moyen de manoeuvre.

2. Dispositif de commande électrique selon la revendication 1,
**caractérisé en ce que** le premier système de mesure (10) est un moyen délivrant la première mesure sous la forme d'un premier signal (S1) de type analogique, le deuxième système de mesure (20) étant un moyen délivrant la deuxième mesure sous la forme d'un deuxième signal (S2) de type numérique.

3. Dispositif de commande électrique selon l'une quelconque des revendications 1 à 2,
**caractérisé en ce que** le premier système de mesure (10) comprend un potentiomètre ou un capteur à effet Hall ou un capteur électrique actif de déplacements de rotation, la première mesure étant exprimée sous la forme d'un premier signal présentant une tension électrique dépendant de ladite position courante.

4. Dispositif de commande électrique selon l'une quelconque des revendications 1 à 3,
**caractérisé en ce que** le deuxième système de mesure (20) comprend une roue codeuse (21) solidaire en rotation du moyen de manoeuvre (3) et un système de traitement (22) coopérant avec ladite roue codeuse (21) pour déterminer une valeur binaire courante correspondant à ladite position courante (POS2), la deuxième mesure étant exprimée sous la forme d'un deuxième signal (S2) comprenant ladite valeur binaire.

5. Dispositif de commande électrique selon l'une quelconque des revendications 1 à 4,
**caractérisé en ce que** ledit dispositif de commande électrique (1) comprend un système de rappel (4) tendant à rappeler ledit moyen de manoeuvre (3) dans ladite position neutre (POS1).

6. Dispositif de commande électrique selon la revendication 5,
**caractérisé en ce que** ledit système de rappel (4) comporte un premier ressort (501) et un deuxième ressort (502) qui sont munis respectivement d'une première extrémité mobile (503) et d'une deuxième extrémité mobile (504), ledit moyen de manoeuvre (3) comprenant un élément agencé circonférentiellement entre la première extrémité mobile (503) et la deuxième extrémité mobile (504), ledit système de rappel (4) comprenant une butée (505), ledit premier ressort (501) tendant à déplacer circonférentiellement selon un premier sens (DIR1) ladite première extrémité mobile (503) contre la butée (505) pour positionner l'organe de manoeuvre (3) dans la position neutre, ledit deuxième ressort (502) tendant à déplacer circonférentiellement selon un deuxième sens (DIR2) ladite deuxième extrémité mobile (504) contre la butée (505) pour positionner l'organe de manoeuvre dans la position neutre.

7. Dispositif de commande électrique selon l'une quelconque des revendications 1 à 4,
**caractérisé en ce que** ledit dispositif de commande électrique (1) comprend un système de retenue (6) tendant à retenir ledit moyen de manoeuvre (3) dans au moins une position dite « indexée » par rapport au support (2).

8. Dispositif de commande électrique selon l'une quelconque des revendications 1 à 7,
**caractérisé en ce que** ledit dispositif de commande électrique (1) présente un premier ensemble muni du support (2) ainsi que du moyen de manoeuvre (3) et du premier système de mesure (10) et du deuxième système de mesure (20), ladite unité de traitement (30) étant fixée au premier ensemble en étant solidaire du support (2), ladite unité de traitement (30) étant destinée à être reliée à au moins un calculateur (86) indépendant physiquement du premier ensemble, ladite unité de traitement (30) transmettant au calculateur (86) ledit signal de commande (ORD), ledit signal de commande (ORD) étant relatif à un paramètre dont la valeur est établie en fonction d'une position mesurée lorsque la première mesure et la deuxième mesure correspondent chacune à ladite position mesurée ou de ladite position neutre (POS1) lorsque la première mesure et la deuxième mesure ne correspondent pas à une même position.

9. Dispositif de commande électrique selon l'une quelconque des revendications 1 à 7,
**caractérisé en ce que** ledit dispositif de commande électrique (1) présente un premier ensemble muni du support (2) ainsi que du moyen de manoeuvre (3) et du premier système de mesure (10) et du deuxième système de mesure (20), ladite unité de traitement (30) n'étant pas fixée au premier ensemble, l'unité de traitement étant déportée par rapport à ce premier ensemble, ladite unité de traitement (30) étant reliée au premier ensemble par au moins un bus (36), ledit bus (36) étant relié au premier système de mesure (10) et au deuxième système de mesure (20), ledit signal de commande (ORD) étant relatif à un paramètre dont la valeur est établie en fonction d'une position mesurée lorsque la première mesure et la deuxième mesure correspondent chacune à ladite position mesurée ou de ladite position neutre (POS1) lorsque la première mesure et la deuxième mesure ne correspondent pas à une même position.

10. Aéronef (50) muni d'au moins un rotor principal (61) participant au moins partiellement à la sustentation de l'aéronef (50), ledit aéronef (50) comprenant au moins un système propulsif (80) distinct dudit rotor principal (61), ledit système propulsif (80) générant une poussée dite « poussée additionnelle (P) » pour au moins participer à la mise à l'avancement de l'aéronef (50),
**caractérisé en ce que** ledit aéronef (50) comporte un dispositif de commande électrique (1) selon l'une quelconque des revendications 1 à 9, ledit dispositif de commande électrique (1) étant relié au système propulsif (80) pour contrôler au moins partiellement ladite poussée additionnelle (P), ledit signal de commande (ORD) requérant un taux de variation de ladite poussée additionnelle (P) transmis au système propulsif (80).

11. Aéronef selon la revendication 10,
**caractérisé en ce que** ledit système propulsif (80) comprenant au moins une hélice (800) comportant une pluralité de pales (83) à pas variable, ledit système propulsif (80) comprenant un système de modification de pas (850) pour modifier ledit pas, ladite unité de traitement (30) est reliée au système de modification de pas (850).

12. Aéronef selon l'une quelconque des revendications 10 à 11,
**caractérisé en ce que** ledit aéronef (50) comporte un organe de manoeuvre électrique de secours (40) relié au système propulsif (80).

13. Aéronef selon l'une quelconque des revendications 10 à 12,
**caractérisé en ce que** ledit aéronef (50) comporte un organe de manoeuvre mécanique de secours (45) relié au système propulsif.

14. Procédé pour commander un système propulsif d'un aéronef selon l'une quelconque des revendications 10 à 13,
**caractérisé en ce que** le procédé comporte les étapes suivantes :
- génération de la première mesure et de la deuxième mesure,
- comparaison de la première mesure et de la deuxième mesure,
- génération d'un taux de variation pour piloter la poussée additionnelle (P) en fonction de la position dudit moyen de manoeuvre (3) par rapport à une référence (POS1), ledit taux de variation étant généré en fonction d'une position dite « position mesurée » du moyen de manoeuvre (3) lorsque la première mesure et la deuxième mesure correspondent simultanément à ladite position mesurée, ledit taux de variation étant réglé à zéro lorsque la première mesure et la deuxième mesure ne correspondent pas à une même position.

15. Procédé selon la revendication 14,
**caractérisé en ce que** ladite étape de comparaison de la première mesure et de la deuxième mesure comporte les phases suivantes :
- détermination d'un premier taux de variation correspondant à la première mesure en utilisant une loi donnant ledit premier taux de variation en fonction de la première mesure,
- détermination d'un deuxième taux de variation correspondant à la deuxième mesure en utilisant une loi donnant ledit deuxième taux de variation en fonction de la deuxième mesure,
- comparaison du premier taux de variation et du deuxième taux de variation.

16. Procédé selon l'une quelconque des revendications 14 à 15,
**caractérisé en ce que**, le système propulsif comprenant au moins une hélice, ledit procédé comporte une étape de positionnement d'un pas moyen des pales de l'hélice dans une position prédéterminée lorsqu'un organe de manoeuvre électrique de secours (40) est manoeuvré par un pilote.

17. Procédé selon l'une quelconque des revendications 14 à 16,
**caractérisé en ce que** ledit système propulsif (80) comprenant au moins une hélice (800) comportant une pluralité de pales (83) à pas variable, ledit système propulsif (80) comprenant un système de modification de pas pour modifier ledit pas, ledit taux de variation est un taux de variation dudit pas desdites pales (83) de l'hélice (800), ledit procédé comportant une étape de modification dudit pas en appliquant ledit taux de variation.

## Patentansprüche

1. Elektrische Steuervorrichtung (1), die mit einem Betätigungsmittel (3) und einem Träger (2) versehen ist, wobei das Betätigungsmittel (3) in Bezug auf den Träger (2) beweglich ist, wobei das Betätigungsmittel (3) dazu bestimmt ist, von einer Person in Bezug auf den Träger (2) bewegt zu werden,
wobei die elektrische Steuervorrichtung (1) ein erstes Messsystem (10) umfasst, das eine erste Messung einer aktuellen Position (POS2) des Betätigungsmittels (3) in Bezug auf eine neutrale Position durchführt,
wobei die elektrische Steuervorrichtung (1) ein zweites Messsystem (20) umfasst,
wobei das erste Messsystem (10) und das zweite Messsystem (20) unabhängig und ungleich sind,
wobei die elektrische Steuervorrichtung (1) eine Verarbeitungseinheit (30) umfasst,
**dadurch gekennzeichnet, dass** das zweite Messsystem (20) eine zweite Messung der aktuellen Position (POS2) durchführt, und dass die Verarbeitungseinheit (30) die erste Messung und die zweite Messung vergleicht, um ein Steuersignal (ORD) in Abhängigkeit von der aktuellen Position (POS2) zu erzeugen, wobei die Verarbeitungseinheit (30) annimmt, dass sich das Betätigungsmittel (3) in der neutralen Position (POS1) befindet, wenn die erste Messung und die zweite Messung nicht einer gleichen Position der Betätigungseinrichtung entsprechen.

2. Elektrische Steuervorrichtung nach Anspruch 1, **dadurch gekennzeichnet, dass** das erste Messsystem (10) ein Mittel ist, das die erste Messung als ein erstes, analoges Signal (81) liefert, und das zweite Messsystem (20) ein Mittel ist, das die zweite Messung als ein zweites, digitales Signal (82) liefert.

3. Elektrische Steuervorrichtung nach einem der Ansprüche 1 bis 2,
**dadurch gekennzeichnet, dass** das erste Messsystem (10) ein Potentiometer oder einen Halleffekt-Sensor oder einen aktiven elektrischen Sensor für Drehbewegungen umfasst, wobei die erste Messung als ein erstes Signal ausgedrückt wird, das eine von der aktuellen Position abhängige elektrische Spannung aufweist.

4. Elektrische Steuervorrichtung nach einem der Ansprüche 1 bis 3,
**dadurch gekennzeichnet, dass** das zweite Messsystem (20) ein Codierrad (21), das drehfest mit dem Betätigungsmittel (3) verbunden ist, und ein Verarbeitungssystem (22) umfasst, das mit dem Codierrad (21) zusammenwirkt, um einen aktuellen Binärwert zu bestimmen, der der aktuellen Position (POS2) entspricht, wobei die zweite Messung als ein zweites Signal (S2) ausgedrückt wird, das den Binärwert aufweist.

5. Elektrische Steuervorrichtung nach einem der Ansprüche 1 bis 4,
**dadurch gekennzeichnet, dass** die elektrische Steuervorrichtung (1) ein Rückstellsystem (4) zum Rückstellen des Betätigungsmittels (3) in die Neutralposition (POS1) umfasst.

6. Elektrische Steuervorrichtung nach Anspruch 5,
**dadurch gekennzeichnet, dass** das Rückstellsystem (4) eine erste Feder (501) und eine zweite Feder (502) aufweist, die jeweils mit einem ersten beweglichen Ende (503) und einem zweiten beweglichen Ende (504) versehen sind, wobei das Betätigungsmittel (3) ein Element umfasst, das in Umfangsrichtung zwischen dem ersten beweglichen Ende (503) und dem zweiten beweglichen Ende (504) angeordnet ist, wobei das Rückstellsystem (4) einen Anschlag (505) umfasst, die erste Feder (501) dazu neigt, das erste bewegliche Ende (503) in Umfangsrichtung in eine erste Richtung (DIR1) gegen den Anschlag (505) zu bewegen, um das Betätigungsmittel (3) in der neutralen Position zu positionieren, und die zweite Feder (502) dazu neigt, das zweite bewegliche Ende (504) in Umfangsrichtung in eine zweite Richtung (DIR2) gegen den Anschlag (505) zu bewegen, um das Betätigungsmittel in der neutralen Position zu positionieren.

7. Elektrische Steuervorrichtung nach einem der Ansprüche 1 bis 4,
**dadurch gekennzeichnet, dass** die elektrische Steuervorrichtung (1) ein Haltesystem (6) zum Halten des Betätigungsmittels (3) in mindestens einer so genannten "indexierten" Position in Bezug auf die Halterung (2) umfasst.

8. Elektrische Steuervorrichtung nach einem der Ansprüche 1 bis 7,
**dadurch gekennzeichnet, dass** die elektrische Steuervorrichtung (1) eine erste Baugruppe aufweist, die den Träger (2) und das Betätigungsmittel (3) sowie das erste Messsystem (10) und das zweite Messsystem (20) umfasst, dass die Verarbeitungseinheit (30) an der ersten Baugruppe befestigt und mit dem Träger (2) verbunden ist, wobei die Verarbeitungseinheit (30) vorgesehen ist, um mit mindestens einem von der ersten Baugruppe physisch unabhängigen Rechner (86) verbunden zu sein, und die Verarbeitungseinheit (30) das Steuersignal (ORD) an den Rechner (86) sendet, wobei das Steuersignal (ORD) sich auf einen Parameter bezieht, dessen Wert als Funktion einer gemessenen Position, wenn die erste Messung und die zweite Messung jeweils der gemessenen Position entsprechen, oder der neutralen Position (POS1) bestimmt wird, wenn die erste Messung und die zweite Messung nicht der gleichen Position entsprechen.

9. Elektrische Steuervorrichtung nach einem der Ansprüche 1 bis 7,
**dadurch gekennzeichnet, dass** die elektrische Steuervorrichtung (1) eine erste Baugruppe aufweist, die den Träger (2) und das Betätigungsmittel (3) sowie das erste Messsystem (10) und das zweite Messsystem (20) umfasst, wobei die Verarbeitungseinheit (30) nicht an der ersten Baugruppe befestigt ist, wobei die Verarbeitungseinheit von der ersten Baugruppe abgesetzt ist und die Verarbeitungseinheit (30) über mindestens einen Bus (36) mit der ersten Baugruppe verbunden ist, und der Bus (36) mit dem ersten Messsystem (10) und dem zweiten Messsystem (20) verbunden ist, wobei das Steuersignal (ORD) sich auf einen Parameter bezieht, dessen Wert als Funktion einer gemessenen Position, wenn die erste Messung und die zweite Messung jeweils der gemessenen Position entsprechen, oder der neutralen Position (POS1) bestimmt wird, wenn die erste Messung und die zweite Messung nicht der gleichen Position entsprechen.

10. Fluggerät (50) mit mindestens einem Hauptrotor (61), der mindestens teilweise am Halten des Fluggeräts (50) in der Luft beteiligt ist, wobei das Fluggerät (50) mindestens ein von dem Hauptrotor (61) verschiedenes Antriebssystem (80) umfasst, wobei das Antriebssystem (80) einen so genannten "zusätzlichen Schub (P)" erzeugt, um zum Vorankommen des Fluggeräts (50) mindestens beizutragen,
**dadurch gekennzeichnet, dass** das Fluggerät (50) eine elektrische Steuervorrichtung (1) nach einem der Ansprüche 1 bis 9 aufweist, wobei die elektrische Steuervorrichtung (1) mit dem Antriebssystem (80) verbunden ist, um den zusätzlichen Schub (P) zumindest teilweise zu steuern, wobei das Steuersignal (ORD) eine Änderungsrate des zusätzlichen Schubs (P) anfordert, der auf das Antriebssystem (80) übertragen wird.

11. Fluggerät nach Anspruch 10,
**dadurch gekennzeichnet, dass** das Antriebssystem (80) mindestens eine Luftschraube (800) mit einer Mehrzahl von Blättern (83) mit variabler Neigung umfasst, wobei das Antriebssystem (80) ein Neigungsänderungssystem (850) zum Ändern der Neigung umfasst und die Verarbeitungseinheit (30) mit dem Neigungsänderungssystem (850) verbunden ist.

12. Fluggerät nach einem der Ansprüche 10 bis 11,
**dadurch gekennzeichnet, dass** das Fluggerät (50) ein elektrisches Notbetätigungsmittel (40) aufweist, das mit dem Antriebssystem (80) verbunden ist.

13. Fluggerät nach einem der Ansprüche 10 bis 12,
**dadurch gekennzeichnet, dass** das Fluggerät (50) ein mechanisches Notbetätigungsmittel (45) aufweist, das mit dem Antriebssystem verbunden ist.

14. Verfahren zum Steuern eines Fluggerätantriebssystems nach einem der Ansprüche 10 bis 13, **dadurch gekennzeichnet, dass** das Verfahren die folgenden Schritte umfasst:
Erzeugen der ersten und der zweiten Messung,
Vergleichen der ersten Messung und der zweiten Messung,
Erzeugen einer Änderungsrate zum Steuern des zusätzlichen Schubs (P) als Funktion der Position des Betätigungsmittels (3) in Bezug auf eine Referenz (POS1), wobei die Änderungsrate als Funktion einer als "gemessene Position" bezeichneten Position des Betätigungsmittels (3) erzeugt wird, wenn die erste Messung und die zweite Messung gleichzeitig der gemessenen Position entsprechen, und die Änderungsrate auf Null gesetzt wird, wenn die erste Messung und die zweite Messung nicht einer gleichen Position entsprechen.

15. Verfahren nach Anspruch 14, **dadurch gekennzeichnet, dass** der Schritt des Vergleichens der ersten Messung und der zweiten Messung die folgenden Schritte umfasst:
Bestimmen einer ersten Änderungsrate, die der ersten Messung entspricht, unter Verwendung einer Regel, die die erste Änderungsrate als Funktion der ersten Messung angibt,
Bestimmen einer zweiten Änderungsrate, die der zweiten Messung entspricht, unter Verwendung einer Regel, die die zweite Änderungsrate als Funktion der zweiten Messung angibt,
Vergleichen der ersten Änderungsrate und der zweiten Änderungsrate.

16. Verfahren nach einem der Ansprüche 14 bis 15,
**dadurch gekennzeichnet, dass** das Antriebssystem mindestens eine Luftschraube umfasst, wobei das Verfahren einen Schritt zum Positionieren einer mittleren Steigung der Blätter der Luftschraube in einer vorbestimmten Position beinhaltet, wenn ein elektrisches Notbetätigungsmittel (40) von einem Piloten betätigt wird.

17. Verfahren nach einem der Ansprüche 14 bis 16,
**dadurch gekennzeichnet, dass** das Antriebssystem (80) mindestens eine Luftschraube (800) mit einer Mehrzahl von Blättern (83) mit variabler Neigung umfasst, wobei das Antriebssystem (80) ein Neigungsänderungssystem zum Modifizieren der Neigung umfasst, wobei die Änderungsrate eine Änderungsrate der Neigung der Blätter (83) der Luftschraube (800) ist, wobei das Verfahren einen Schritt des Änderns der Neigung durch Anwenden der Änderungsrate umfasst.

## Claims

1. Electric control device (1) provided with operating means (3) and a support (2), the operating means (3) being movable relative to this support (2), the operating means (3) being intended to be displaced relative to the support (2) by a person, the electric control device (1) comprising a first measuring system (10) which carries out a first measurement of a current position (POS2) of the operating means (3) relative to a neutral position, the electric control device (1) comprising a second measuring system (20), the first measuring system (10) and the second measuring system (20) being independent and dissimilar, the electric control device (1) comprising a processing unit (30),
**characterised in that** the second measuring system (20) carries out a second measuring of the current position (POS2), and **in that** the processing unit (30) compares the first measurement and the second measurement to generate a control signal (ORD) depending on said current position (POS2), the processing unit (30) considering that the operating means (3) is in said neutral position (POS1) when the first measurement and the second measurement do not correspond to a same position of the operating means.

2. Electric control device according to Claim 1,
**characterised in that** the first measuring system (10) is a means delivering the first measurement in the form of a first signal (S1) of the analogue type, the second measuring system (20) being a means delivering the second measurement in the form of a second signal (S2) of the numeric type.

3. Electric control device according to any one of Claims 1 to 2,
**characterised in that** the first measuring system (10) comprises a potentiometer or a Hall effect sensor or an active electric rotational displacement sensor, the first measurement being expressed in the form of a first signal presenting an electrical voltage dependent on said current position.

4. Electric control device according to any one of Claims 1 to 3,
**characterised in that** the second measuring system (20) comprises an encoder wheel (21) rotatably connected to the operating means (3) and a processing system (22) cooperating with said encoder wheel (20) to determine a binary current value corresponding to said current position (POS2), the second measurement being expressed in the form of a second signal (S2) comprising said binary value.

5. Electric control device according to any one of Claims 1 to 4,
**characterised in that** the electric control device (1) comprises a return system (4), which returns the operating means (3) into said neutral position (POS1).

6. Electric control device according to Claim 5,
**characterised in that** said return system (4) comprises a first spring (501) and a second spring (502), which are provided respectively with a first mobile end (503) and a second mobile end (504), the operating means (3) comprising an element arranged circumferentially between the first mobile end (503) and the second mobile end (504), the return system (4) comprising a stop (505), the first spring (501) tending to circumferentially move the first mobile end (503) in a first direction (DIR1) against the stop (505) to position the operating element (3) in the neutral position, the second spring (502) tending to circumferentially move the second mobile end (504) in a second direction (DIR2) against the stop (505) to position the operating element in the neutral position.

7. Electric control device according to any one of Claims 1 to 4,
**characterised in that** the electric control device (1) comprises a restraint system to hold the operating means (3) in at least one so-called "indexed" position relative to the support (2).

8. Electric control device according to any one of Claims 1 to 7,
**characterised in that** the electric control device (1) has a first assembly provided with the support (2) as well as the operating means (3) and the first measuring system (10) and the second measuring system (20), the processing unit (30) being fixed to the first assembly by forming an integral part of the support (2), the processing unit (30) being intended to be connected to at least one computer (86) physically independent of the first assembly, the processing unit (30) transmitting to the computer (86) the control signal (ORD), said control signal (ORD) being relative to a parameter the value of which is established according to a position measured when the first measurement and the second measurement each correspond to said measured position or said neutral position (POS1) when the first measurement and the second measurement do not correspond to a same position.

9. Electric control device according to any one of Claims 1 to 7,
**characterised in that** the electric control device (1) has a first assembly provided with the support (2) as well as the operating means (3) and the first measuring system (10) and the second measuring system (20), the processing unit (30) not being fixed to the first assembly, the processing unit being offset in relation to this first assembly, said processing unit (30) being connected to the first assembly by at least one bus (36), said bus (36) being connected to the first measuring system (10) and to the second measuring system (20), the control signal (ORD) being relative to a parameter the value of which is established in dependence on a position measured when the first measurement and the second measurement each correspond to said measured position or said neutral position (POS1) when the first measurement and the second measurement do not correspond to a same position.

10. Aircraft fitted with at least one main rotor (61) taking part at least partially in the lift of the aircraft (50), said aircraft (50) comprising at least one propulsion system (80) separate from said main rotor (61), the propulsion system (80) generating a thrust called "additional thrust (P)" to at least take part in the moving forward of the aircraft (50),
**characterised in that** said aircraft (50) comprises an electric control device according to any one of Claims 1 to 9, said electric control device (1) being connected to the propulsion system (80) to at least partially control said additional thrust (P), said control signal (ORD) requiring a variation rate of said additional thrust (P) transmitted to the propulsion system (80).

11. Aircraft according to Claim 10,
**characterised in that** said propulsion system (80) comprising at least one propeller (800) comprises a plurality of variable pitch blades (83), said propulsion system (80) comprises a pitch changing system (850) for changing the pitch, said processing unit (30) is connected to the pitch changing system (850).

12. Aircraft according to any one of Claims 10 to 11,
**characterised in that** said aircraft (50) comprises an electric emergency operating element (40) connected to the propulsion system (80).

13. Aircraft according to any one of Claims 10 to 12,
**characterised in that** said aircraft (50) comprises a mechanical emergency operating element (45) connected to the propulsion system.

14. Process for controlling a propulsion system of an aircraft according to any one of Claims 10 to 13,
**characterised in that** the process comprises the following stages:
- generation of the first measurement and of the second measurement,
- comparison of the first measurement and the second measurement,
- generation of a variation rate to control the additional thrust (P) according to the position of said operating means (3) in relation to a reference (POS1), said variation rate being generated according to a position called "measured position" of the operating means (3) when the first measurement and the second measurement simultaneously correspond to said measured position, said variation rate being set to zero when the first measurement and the second measurement do not correspond to a same position.

15. Process according to Claim 14,
**characterised in that** said comparison stage of the first measurement and of the second measurement comprises the following phases:
- determination of a first variation rate corresponding to the first measurement using a law giving said first variation rate according to the first measurement,
- determination of a second variation rate corresponding to the second measurement using a law giving the second variation rate according to the second measurement,
- comparison of the first variation rate and the second variation rate.

16. Process according to any one of Claims 14 to 15,
**characterised in that**, the propulsion system comprising at least one propeller, said process comprises a positioning stage of a mean pitch of the blades of the propeller in a predetermined position when an emergency electrical actuator (40) is actuated by a pilot.

17. Process according to any one of Claims 14 to 16,
**characterised in that** said propulsion system (80) comprising at least one propeller (800) having a plurality of variable pitch blades (83), the propulsion system (80) comprising a pitch changing system to change the pitch, said variation rate is a variation rate of said pitch of said blades (83) of the propeller (800), said process comprising a pitch changing stage by applying said variation rate.
